## Europäisches Patentamt
## European Patent Office
## Office européen des brevets

(19)

(11) Publication number: **0 034 685**
**B1**

(12)

# EUROPEAN PATENT SPECIFICATION

(45) Date of publication of patent specification: **21.09.83**

(51) Int. Cl.³: **F 16 J 15/32, B 62 D 55/20**

(21) Application number: **80304627.5**

(22) Date of filing: **19.12.80**

(54) **Rotatable joint with face seal.**

(30) Priority: **19.02.80 PC T/US80/00166**

(43) Date of publication of application:
**02.09.81 Bulletin 81/35**

(45) Publication of the grant of the patent:
**21.09.83 Bulletin 83/38**

(84) Designated Contracting States:
**DE FR GB IT**

(56) References cited:
**EP - A - 0 027 304**
**CH - A - 275 908**
**DE - U - 1 827 236**
**GB - A - 1 025 884**
**US - A - 2 650 117**
**US - A - 2 657 080**
**US - A - 3 110 097**
**US - A - 3 400 939**
**US - A - 3 614 113**
**US - A - 4 007 972**

(73) Proprietor: **CATERPILLAR TRACTOR CO.**
**100 Northeast Adams Street**
**Peoria Illinois 61629 (US)**

(72) Inventor: **Reinsma, Harold L.**
**R.R. 1,**
**Dunlap Illinois 61252 (US)**

(74) Representative: **Jackson, Peter Arthur et al,**
**GILL JENNINGS & EVERY 53-64 Chancery Lane**
**London WC2A 1HN (GB)**

Courier Press, Leamington Spa, England.

This invention relates to a joint having a first member defining an axially outwardly opening recess, which has an axially inner surface and a radially inwardly facing, substantially cylindrical, circumferential surface; a second member adjacent to the first member and defining a sealing surface confronting the recess, the first and second members being associated so as to have relative rotational movement about the axis of the recess and relative movement towards and away from each other along the axis; and a sealing assembly in the recess for sealing the member.

As disclosed in DE—U—1827236, the sealing assembly comprises an annular seal having a radially outer seal base portion positioned coaxially in the recess, an annular sealing portion defining a lip sealingly engaging the confronting sealing surface, and a flexible seal connecting portion extending between the seal base portion and sealing portion for movably supporting the sealing portion; a stiffener portion operatively connected to the sealing portion and presenting an outer portion exposed axially inwardly of the seal sealing portion in the recess; and spring means positioned coaxially in the recess and acting between the first member and the stiffener portion to urge the lip axially outwardly of the recess into sealing engagement with the confronting surface. According to the invention such a sealing assembly is characterized by an additional annular diaphragm having a radially outer base portion positioned coaxially axially inwardly of the seal base portion in the recess and being in direct sealing engagement with the circumferential surface of the recess; and a flexible diaphragm connecting portion extending between the diaphragm base and stiffener portions axially inwardly of the seal connecting portion in the recess.

With this arrangement the sealing portion of the seal ring is securely but flexibly supported, particularly by the connecting portion of the diaphragm and by the stiffener. The stiffener is arranged to transmit the spring biasing force directly to the lip of the seal sealing portion to provide a reliable seal throughout a range of relative axial movement between the two joint members. The flexible connecting portions of the seal and diaphragm are preferably curvilinear in the radial direction, for example of S-configuration, to provide axial movement between the base portions and stiffener and sealing portions. The connecting portions are preferably complementary to one another and may be in facial engagement.

The base portion of the diaphragm is preferably in static sealing engagement with the first member and is preferably press fitted into the cylindrical inner surface of the recess.

Preferably the seal base portion is in sealing engagement with the circumferential surface and the seal covers the diaphragm at least between the circumferential surface and the seal sealing portion thereby protecting the diaphragm from foreign matter or the ambient atmosphere entering the recess radially outwardly of the seal between the lip and confronting surface of the second member.

The diaphragm base portion may include a radially inwardly extending flange adjacent to, e.g. abutting, the inner surface of the recess and providing an abutment for the spring means. This permits the sealing assembly to be preassembled as a tamper-proof cartridge unit. The flange also acts as a wear resistant spacer so that when the spring means is a Belleville spring means, the spring may be movable past its flat position in the range of relative axial movement between the joint members. This effectively minimizes the variation in spring force.

The stiffener portion of the diaphragm may be secured to the seal sealing portion by being at least partly embedded in the sealing portion and/or by means of plurality of openings in the stiffener portion through which part of the sealing portion extends, e.g. as a result of moulding of the seal ring. The stiffener portion may enclose a part of the seal sealing portion and in one construction comprises a radially inner portion of the diaphragm which is looped and overlaps itself, to form a box section. The box provides the diaphragm with high torsional rigidity.

The diaphragm can thus be shaped from a single piece of thin, high modulus material, preferably steel, incorporating an annular stiffener box, a convoluted connecting portion having high torsional rigidity while being axially flexible, a base portion for press fitting in the recess, and the inwardly projecting flange.

The seal ring may be made from a wear resistant synthetic resin, e.g. a plastics or elastomeric material, and may be moulded and bonded onto the diaphragm for support and to protect the diaphragm from corrosive and abrasive attack. When the seal base portion is in static sealing contact with the circumferential surface of the recess, an integral imperforate construction of the base portion, connecting portion and sealing portion of the seal ring ensure that no connection is exposed to external elements which could induce leakage.

An example of a joint constructed in accordance with the present invention is illustrated in the accompanying drawings, in which:—

Figure 1 is an axial section through the joint;

Figure 2 is a section corresponding to part of Figure 1 but to an enlarged scale; and,

Figure 3 is a section taken on the line 3—3 in Figure 2.

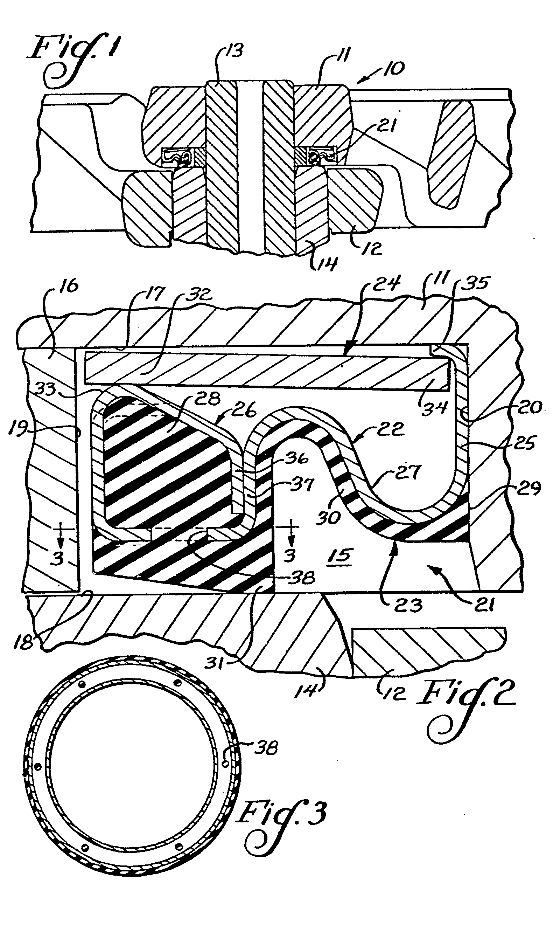

The drawings show a track joint 10 wherein a first track link 11 is movably connected to a second track link 12 by means of a pin 13 having a portion rotational within a bushing 14 and a portion press fitted within the link 11, as shown in Figure 1. Link 11 and bushing 14 cooperatively define an annular seal recess 15 extending coaxially about pin 13. A thrust ring having a radially outer surface 19 extends coaxially about the pin between an axially inner surface 17 of link 11 and an axially outer surface 18 of the bushing 14. The radially outer surface 19 of the thrust ring cooperates with a radially inwardly facing cylindrical surface 20 of the link 11 defining the radially outer wall of the seal space 15 and defining the annular extent of the seal space.

As shown in more detail in Figure 2, a sealing assembly 21 movably seals joint members consisting of the link 11 and bushing 14 during axial and rotational movement of the bushing 14 relative to the link as may occur in the normal operation of the track. As shown, the sealing assembly includes a flexible annular metal diaphragm 22, an annular seal ring 23, and biasing spring means 24.

Diaphragm 22 includes a radially outer base portion 25 which is press fitted into the recess 15 in abutment with the link surface 20. The diaphragm further includes a radially inner stiffener portion 26 and a flexible curvilinear connecting portion 27 extending between the stiffener portion 26 and base 25.

As shown in Figure 2, the diaphragm stiffener portion 26 is embedded in a sealing portion 28 of seal ring 23 which is connected to a flared radially outer base portion 29 thereof by a flexible thin walled connecting portion 30.

Sealing portion 28 of the seal ring further has a lip portion 31 sealingly engaging the confronting bushing surface 18. Lip portion 31 is biased against the surface 18 by the spring means 24 which, as shown in Figure 2, may comprise annular Belleville spring means having a radially inner portion 32 engaging a plurality of projecting portions 33 of the stiffener 26 to apply a spring biasing force through the stiffener 26 to the lip 31. The radially outer portion 34 of the Belleville spring 24 abuts an inturned flange 35 of the diaphragm base 25 so as to permit free spring movement at all times.

As further seen in Figure 2, the stiffener portion 26 comprises a looped radially inner portion of the diaphragm 22 and effectively defines a box section with the distal end 36 of the stiffener portion overlapping a cylindrical portion 37 connecting the stiffener portion to the diaphragm connecting portion 27. Thus, the stiffener is, in effect, embedded in the seal ring sealing portion 28 so as to provide a firm connection between the seal ring and diaphragm. To provide further positive securing of the seal ring and diaphragm, the stiffener portion is provided with a plurality of circumferentially spaced openings 38 through which sealing portion 28 may be moulded. As shown in Figure 3, six such openings 38 are provided as uniformly circumferentially distributed securing means.

As illustrated, the diaphragm may be formed of a strong material, such as steel, while yet having a thin wall construction providing the curvilinear connecting portion as the desirable flexible connection of the stiffener portion 26 to the base portion 25. The seal ring may be formed of a resilient, abrasion-resistant sealing material, such as synthetic resin or elastomeric material, one example thereof being polyurethane. The Belleville spring means 24 may comprise a conventional annular Belleville spring which is arranged so as to deflect past the flat position over the range of axial movement of the bushing 14 relatively to the link 11. As shown in Figure 2, in the axially closest position of the bushing 14 relative to the link, the spring is urged axially to adjacent the link surface 17. When relative movement between the link 11 and bushing 14 occurs so as to increase the axial extent of the space 15, spring 24 urges the stiffener portion 26 axially so as to maintain the desirable sealing engagement of lip 31 with the bushing sealing surface 18 and thereby provide an effectively stabilized dynamic seal between the seal ring 23 and the bushing.

Base portion 29 of the seal ring 23, and the press fit of base 25 in the surface 20, effectively provide a static seal to the link 11 at all times. Further, the connecting portion 30 of the seal ring extending complementarily to the connecting portion 27 of the diaphragm protects the diaphragm against corrosion from the atmosphere to which the seal space 15 opens axially and radially between the members 11 and 12.

The sealing assembly is advantageously adapted for use in a wide range of applications wherein axial and rotational movement occur between two joint members in the presence of abrasive materials. The sealing structure provides an improved dynamic seal with one of the members which is effectively maintained by directing a spring force through a stiffener formed integrally with a connecting portion and base and complementarily mounted to the seal ring to provide an improved readily installed cartridge-type sealing structure.

The overcentre frustoconical Belleville spring provides a relatively constant spring force over the range of relative movement between the joint members so as to provide an improved maintained effective sealing of the lip 31 with the sealing surface 18.

The stiffener 26 effectively defines a torque box. As the stiffener is connected by an annular connecting portion 27 to the base 25 which is sealingly fitted in the link 11, a second static seal is provided. In the illustrated embodiment, the diaphragm base portion 25 is press fitted into the counterbore of the link 14 defining recess 15 so as to provide a positive static seal therebetween.

## Claims

1. A joint (10) having a first member (11) defining an axially outwardly opening recess (15), which has an axially inner surface (17) and a radially inwardly facing, substantially cylindrical, circumferential surface (20); a second member (14) adjacent to the first member and defining a sealing surface (18) confronting the recess, the first and second members being associated so as to have relative rotational movement about the axis of the recess and relative movement towards and away from each other along the axis; and a sealing assembly (21) in the recess for sealing the members, the sealing assembly comprising an annular seal (23) having a radially outer seal base portion (29) positioned coaxially in the recess (15), an annular sealing portion (28) defining a lip (31) sealingly engaging the confronting sealing surface (18), and a flexible seal connecting portion (30) extending between the seal base portion (29) and sealing portion (28) for movably supporting the sealing portion; a stiffener portion (26) operatively connected to the seal sealing portion (28) and presenting an outer portion (33) exposed axially inwardly of the seal sealing portion (28) in the recess; and spring means (24) positioned coaxially in the recess and acting between the first member and the stiffener portion to urge the lip axially outwardly of the recess into sealing engagement with the confronting surface; characterized by an additional annular diaphragm (22) having a radially outer base portion (25) positioned coaxially axially inwardly of the seal base portion (29) in the recess (15) and being in direct sealing engagement with the circumferential surface (20) of the recess; and a flexible diaphragm connecting portion (27) extending between the diaphragm base (25) and stiffener (26) portions axially inwardly of the seal connecting portion (30) in the recess.

2. A joint according to claim 1, wherein the flexible connecting portions (30, 27) of the seal and diaphragm are curvilinear in the radial direction.

3. A joint according to claim 2, wherein the flexible curvilinear connecting portions (30, 27) are in facial engagement.

4. A joint according to any one of the preceding claims, wherein the seal base portion (29) is in sealing engagement with the circumferential surface (20) and the seal (23) covers the diaphragm (22) between the circumferential surface and the seal sealing portion lip (31).

5. A joint according to any one of the preceding claims, wherein the diaphragm base portion (25) includes a radially inwardly extending flange (35) adjacent to the inner surface (17) and providing an abutment for the spring means (24, 34).

6. A joint according to any one of the preceding claims, wherein the stiffener portion (26) is provided with a plurality of openings (38) through which the seal sealing portion (28) extends.

7. A joint according to any one of the preceding claims, wherein the stiffener portion (26) is at least partly embedded in the seal portion (28).

8. A joint according to any one of the preceding claims, wherein the stiffener portion of the diaphragm encloses a part of the seal sealing portion.

9. A joint according to claim 8, wherein the stiffener portion (26) of the diaphragm comprises a radially inner portion of the diaphragm which is looped and overlaps itself.

10. A joint according to any one of the preceding claims, wherein the seal base portion (29) is provided by a flared edge to the connecting portion (30), which is a thin wall section.

11. A joint according to any one of the preceding claims, wherein the spring means (24) comprise a Belleville spring means movable past its flat position in the range of relative axial movement between the members.

## Patentansprüche

1. Eine Verbindung (10) mit einem ersten Glied (11), welches eine sich axial nach außen öffnende Ausnehmung (15) definiert, die eine axial innere Oberfläche (17) und eine radial nach inner weisende im wesentlichen zylindrische Umfangsoberfläche (20) aufweist, einem zweiten Glied (14), benachbart zum ersten Glied und eine die Ausnehmung konfrontierende Dichtungsoberfläche (18) definierend, wobei die ersten und zweiten Glieder derart assoziiert sind, daß sie relative Drehbewegung um die Achse der Ausnehmung und Relativbewegung zueinander hin und voneinander weg längs der Achse besitzen, und mit einer Dichtungsanordnung (21) in der Ausnehmung zur Abdichtung der Glieder, wobei die Abdichtanordnung folgendes aufweist: eine Ringdichtung (23) mit einem radial äußeren Abdichtbasisteil (29) positioniert koaxial in der Ausnehmung (15), einem Ringdichtungsteil (28), der eine Lippe (31) abdichtend in Berührung mit der konfrontierenden Abdichtoberfläche (18) definiert, und mit einem flexiblen Dichtungsverbindungsteil (30), der sich zwischen dem Dichtungsbasisteil (29) und dem Abdichtteil (28) zur beweglichen Halterung des Abdichtteils erstreckt; einen Versteifungsteil (26) betriebsmäßig verbunden mit dem Dichtungsabdichteil (28) und einen äußeren Teil (33) präsentierend, und zwar axial nach innen gegenüber dem Dichtungsabsichtteil (28) in der Ausnehmung frieliegend; und Federmittel (24) koaxial in der Ausnehmung positioniert und zwischen dem ersten Glied und dem Versteifungsteil wirkend, um die Lippe axial nach außen aus der Ausnehmung in Abdichteingriff mit der konfrontierenden Oberfläche zu drücken, gekennzeichnet durch eine zusätzliche Ringmembran (22) mit einem radial äußeren Basisteil (25) positioniert koaxial axial nach innen gegenüber dem Abdichtbasisteil (29) in der Ausnehmung (15) und zwar in direkter Abdichtberührung mit der Umfangsoberfläche (20) der Ausnehmung, und gekennzeichnet durch einen flexiblen Membranverbindungsteil (27) der sich zwischen den Membranbasis- (25) und Versteifungsteilen (26) axial nach innen gegenüber dem Dichtungsverbindungsteil (30) in der Ausnehmung erstreckt.

2. Eine Verbindung nach Anspruch 1, wobi die flexiblen Verbindungteile (30, 27) der Dichtung und Membran in Radialrichtung gekrümmt sind.

3. Eine Verbindung nach Anspruch 2, wobei die flexiblen gekrümmten Verbindungsteile (30, 27) in facialem Eingriff stehen.

4. Eine Verbindung nach einem der vorhergehenden Ansprüche, wobei der Dichtungsbasisteil (29) in Abdichtberührung mit der Umfangsoberfläche (20) steht und die Dichtung (23) die Membran (22) zwischen der Umfangsoberfläche und der Dichtungsabdichtteillippe (31) überdeckt.

5. Eine Verbindung nach einem der vorhergehenden Ansprüche, wobei der Membranbasisteil (25) einen radial nach innen sich erstreckenden Flansch (35) benachbart zur Innenoberfläche (17) aufweist und einen Anschlag für die Federmittel (24, 34) vorsieht.

6. Eine Verbindung nach einem der vorhergehenden Ansprüche, wobei der Versteifungsteil (26) mit einer Vielzahl von Öffnungen (38) ausgestattet ist, durch welche sich der Abdichtteil (28) erstreckt.

7. Eine Verbindung nach einem der vorhergehenden Ansprüche, wobei der Versteifungsteil (26) mindestens teilweise in den Dichtungsabdichtteil (28) eingebettet ist.

8. Eine Verbindung nach einem der vorhergehenden Ansprüche, wobei der Versteifungsteil der Membran einen Teil des Dichtungsabdichtteils umschließt.

9. Eine Verbindung nach Anspruch 8, wobei der Versteifungsteil Teil (26) der Membran einen radial inneren Teil der Membran umfaßt, der schliefenförmig geführt ist und sich selbst überlappt.

10. Eine Verbindung nach einem der vorhergehenden Ansprüche, wobei der Abdichtbasisteil (29) mit einer sich erweiternden Kante zum Verbindungs teil (30) ausgestattet ist, und zwar handelt es sich dabei um einen dünnen Wandabschnitt.

11. Eine Verbindung nach einem der vorhergehenden Ansprüche, wobei die Federmittel (24) Belleville-Federmittel aufweisen, die über ihre flache Position im Bereich der relativen Axialbewegung zwischen den Gliedern bewegbar sind.

**Revendications**

1. Articulation (10) ayant un premier élément (11) définissant une cavité (15) s'ouvrant axialement vers l'extérieur, qui a une surface axialement intérieure (17) et une surface circonférentielle, essentiellement cylindrique, tournée radialement vers l'intérieur (20); un second élément (14) adjacent au premier élément et définissant une surface d'étanchéité (18) en regard de la cavité, le premier et le second éléments étant associés de façon à pouvoir effectuer un mouvement de rotation relatif autour de l'axe de la cavité et un mouvement relatif vers et à l'opposé l'un de l'autre le long de l'axe; et un ensemble d'étanchéité (21) dans la cavité pour rendere les éléments étanches, l'ensemble d'étanchéité comprenant un joint annulaire (23) ayant une partie de base de joint radialement extérieure (29) placée coaxialement dans la cavité (15), une partie d'étanchéité annulaire (28) définissant une lèvre (31) s'appliquant de manière étanche contre la surface d'étanchéité en regard (18), et une partie de liaison de joint flexible (30) s'étendant entre la partie de base de joint (29) et la partie d'étanchéité (28) afin de supporter à mouvement la partie d'étanchéité; une partie de raidissement (26) reliée activement à la partie d'étanchéité de joint (28) et présentant une partie extérieure (33) découverte axialement à l'intérieur de la partie d'étanchéité de joint (28) dans la cavité; et un moyen élastique (24) placé coaxialement dans la cavité et agissant entre le premier élément et la partie de raidissement pour silliciter la lèvre axialement vers l'extérieur de la cavité en contact d'étanchéité avec la surface en regard; caractérisée par une membrane annulaire supplémentaire (22) ayant une partie de base radialement extérieure (25) placée coaxialement, axialement vers l'intérieure de la partie de base de joint (29) dans la cavité (15) et étant en contact d'étanchéité direct avec la surface circonférentielle (20) de la cavité; et une partie de liaison de membrane flexible (27) s'étendant entre la partie de base (25) de la membrane et la partie de raidissement (16) axialement à l'intérieur de la partie de liaison de joint (30) dans la cavité.

2. Articulation selon la revendiction 1, dans laquelle les parties de liaison flexibles (30, 27) du joint et de la membrane sont curvilignes dans la direction radiale.

3. Articulation selon la revendication 2, dans laquelle les parties de liaision curvilignes flexibles (30, 27) sont en contact facial.

4. Articulation selon l'une quelconque des revendications précédentes, dans laquelle la partie de base (29) du joint est en contact d'étanchéité avec la surface circonférentielle (20) et le joint (23) courvre la membrane (22) entre la surface circonférentielle et la partie de lèvre d'étanchéité (31) du joint.

5. Articulation selon l'une quelconque des revendications précédentes, dans laquelle la partie de base (25) de la membrane comporte une bordure s'étendant radialement vers l'intérieur (35), adjacente à la surface intérieure (17) et constituant une butée pour le moyen élastique (24, 34).

6. Articulation selon l'une quelconque des revendications précédentes, dans laquelle la partie de raidissement (26) comporte plusieurs ouvertures (38) à travers lesquelles s'étend la partie d'étanchéité (28) du joint.

7. Articulation selon l'une quelconque des revendications précédentes, dans laquelle la partie de raidissement (26) est au moins en partie encastrée, dans la partie d'étanchéité (28) du joint.

8. Articulation selon l'une quelconque des revendications précédentes, dans laquelle la partie de raidissement de la membrane entoure une partie de la partie d'étanchéité du joint.

9. Articulation selon la revendication 8, dans laquelle la partie de raidissement (26) de la membrane comprend und partie radialement intérieure qui est bouclée et se recouvre elle-même.

10. Articulation selon l'une quelconque des revendications précédentes, dans laquelle la partie de base (29) du joint est pourvue d'un bord évasé en direction de la partie de liaison (30) dont la paroi est mince.

11. Articulation selon l'une quelconque des revendications précédentes, dans laquelle le moyen élastique (24) comprend un ressort Belleville déplaçable au-delà de sa position plate dans la gamme des mouvements axiaux relatifs entre les éléments.

*Fig.1*

*Fig.2*

*Fig.3*